(19) **Europäisches Patentamt / European Patent Office / Office européen des brevets**

(11) **EP 4 194 934 B1**

(12) **EUROPEAN PATENT SPECIFICATION**

(45) Date of publication and mention of the grant of the patent:
**06.08.2025   Bulletin 2025/32**

(21) Application number: **21306759.8**

(22) Date of filing: **13.12.2021**

(51) International Patent Classification (IPC):
**G02C 7/02** *(2006.01)*    **B29D 11/00** *(2006.01)*

(52) Cooperative Patent Classification (CPC):
**G02C 7/02; B29D 11/00009; B29D 11/00432; B29D 11/0073;** G02C 2202/16; G02C 2202/18

(54) **OPHTHALMIC ELEMENT COMPRISING A FILM STRUCTURE COMPRISING AN AUXETIC FILM**

OPHTHALMISCHES ELEMENT MIT EINER FILMSTRUKTUR, DIE EINEN AUXETISCHEN FILM ENTHÄLT

ÉLÉMENT OPHTALMIQUE COMPRENANT UNE STRUCTURE DE FILM COMPRENANT UN FILM AUXÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.06.2023   Bulletin 2023/24**

(73) Proprietor: **Essilor International**
**94220 Charenton-Le-Pont (FR)**

(72) Inventors:
• **CANO, Jean-Paul**
 **31650 LAUZERVILLE (FR)**
• **BIVER, Claudine**
 **31320 VIGOULET AUZIL (FR)**

(74) Representative: **Plasseraud IP**
**104 Rue de Richelieu**
**CS92104**
**75080 Paris Cedex 02 (FR)**

(56) References cited:
**WO-A2-2009/004265**

• **BONFANTI ALESSANDRA ET AL: "Elastic stabilization of wrinkles in thin films by auxetic microstructure", EXTREME MECHANICS LETTERS, vol. 33, 1 November 2019 (2019-11-01), NL, pages 100556, XP055918537, ISSN: 2352-4316, DOI: 10.1016/j.eml.2019.100556**

## Description

The present invention relates to an ophthalmic element comprising a film structure, and to a method for manufacturing this ophthalmic element.

## BACKGROUND OF THE INVENTION

It is known to produce an ophthalmic element comprising a vision base element and a film structure that is adhered to at least one face of this vision base element. To ensure that the ophthalmic element so-obtained enables vision to a wearer, the film structure is at least partially optically transparent.

The vision base element generally has a non-planar optical surface that can be classified according to two principal curvature values along two perpendicular directions for any point in this surface of the vision base element. Where one of the curvature values equals zero, corresponding to the case of ruled surfaces, like a portion of a cylindrical or conical fold as particular examples, the optical surface of the vision base element is said to be monoclastic. Where none of the curvature values equals zero but both have same sign, the optical surface of the vision base element is said to be synclastic. Where both curvature values are non-zero and have opposite signs, the optical surface of the vision base element is said to be anticlastic. Using the Gauss curvature definition where the Gauss curvature value equals the product of both principal curvature values, the monoclastic surfaces correspond to zero Gauss curvature value, the synclastic surfaces correspond to positive Gauss curvature values, and the anticlastic surfaces to negative Gauss curvature values. The film structure has a thickness ranging from one hundred nanometers to several or hundreds of micrometers. Thus, the film structure is flexible and supposed to conform to the optical surface of the vision base element. For cost reasons in the manufacture of the film structure, this film structure most often has initially a planar shape.

However, all film structures used up to now have a positive Poisson ratio, which means that when these film structures are stretched parallel to an axial direction, they shrink parallel to a transverse direction which is perpendicular to the axial direction. This behavior causes wrinkles, cracks and delaminations when the film structure is made to conform to the vision base element, when this latter has a synclastic or anticlastic surface.

A known method for avoiding such wrinkles, cracks and delaminations when adhering the film structure onto a vision base element having a synclastic or anticlastic surface is to perform beforehand a preforming of the film. Nevertheless, because the film structure always has a residual elastic behavior, such preforming generates residual stresses within the film structure, which may cause wrinkles, cracks and delaminations to appear again once the film structure has been applied onto the vision base element or later in the lifetime of the product.

In order to reduce these residual stresses in the film structure, which are due to the elastic component of its deformation, it is also known to apply heat treatments to the film structure adhered to the vision base element, but such heat treatments are time-consuming and expensive. In addition, some heat treatments at high temperature may damage fragile compounds contained either in the film structure or in the vision base element. Moreover, these heat treatments do not sufficiently suppress the residual stresses to ensure a long-term efficiency on product reliability. WO 2009/004265 A2 provides a comparative example.

There is thus a need for ophthalmic elements manufactured in such a way as to reduce the manufacturing complexity and cost, while ensuring that stresses produced when adhering the film structure to the vision base element do not cause wrinkles, cracks and delaminations to appear.

## SUMMARY OF THE INVENTION

For meeting these objects or others, a first aspect of the invention proposes an ophthalmic element comprising a vision base element and a film structure that is adhered to a curved optical surface of the vision base element, so that the film structure conforms to this optical surface, wherein the film structure comprises at least one auxetic film that has a negative Poisson ratio v. The Poisson ratio v is defined as:

$$\nu = \frac{-\varepsilon_{trans}}{\varepsilon_{axial}}$$

where $\varepsilon_{trans}$ is a relative transverse strain of the auxetic film, and $\varepsilon_{axial}$ is a relative axial strain of the auxetic film, these relative transverse strain and relative axial strain being positive for increases in transverse dimension and axial dimension, respectively, of the auxetic film, or being negative for decreases in these transverse and axial dimensions.

Since the auxetic film has a negative Poisson ratio, the relative transverse strain $\varepsilon_{trans}$ and the relative axial strain $\varepsilon_{axial}$ can be both positive or both negative, allowing the film structure to conform to the optical surface of the vision base element when this latter is synclastic, while limiting the stresses produced in the film structure. Wrinkles, cracks and delaminations in the ophthalmic element are suppressed as a result. The mechanical and visual performances of the ophthalmic element are thus improved.

Moreover, the manufacture of the ophthalmic element comprising the auxetic film is simplified and reduced in cost, since no preforming or stress-suppressing post-annealing may be necessary. But the invention may be combined with a thermal curing, in particular if a heat-curable material is used, for instance for attaching the auxetic film to the vision base element.

Generally, the film structure may comprise one or several additional components in addition to the auxetic film, but these additional components allow the auxetic behavior to be provided to the film structure by the auxetic film.

In possible embodiments of the invention, the optical surface of the vision base element may have two non-zero curvature values at at least one point of this optical surface, along two directions which are tangential to the optical surface and perpendicular to each other. In particular these two non-zero curvature values may be both positive or both negative. The optical surface of the vision base element is therefore a synclastic surface. Thanks to the auxetic behavior of the film structure, the stresses in this film structure are limited so that the film structure can conform to the synclastic surface without wrinkling, cracking or delaminating from the vision base element.

Also in possible embodiments of the invention, the auxetic film may be provided with a cut pattern. Thanks to such cut pattern, any material commonly used in the ophthalmic field, namely optically transparent materials, can acquire an auxetic behavior.

In invention embodiments where the auxetic film is made of an optically transparent material, in particular such polymer-based material, the ophthalmic element may further comprise portions of an index-matching material that fill gaps of the auxetic film due to the cut pattern. The index-matching material then has a refractive index value which is substantially equal to that of the auxetic film. In this way, the cut pattern becomes invisible or almost invisible. For such invention embodiments, the index-matching material may be of one of the following types: an adhesive, in particular a pressure-sensitive adhesive, a hot-melt adhesive, a UV-cured adhesive composition, a thermally-cured adhesive composition, and also a primer, a hard coat, etc. without limitation. The index-matching material can therefore be adapted to different manufacturing conditions.

Again for such invention embodiments, a layer of the index-matching material may extend between the vision base element and the auxetic film, continuously across the optical surface, so as to permanently connect the auxetic film to the vision base element. The index-matching material may therefore be used to adhere the film structure to the optical surface of the vision base element, in addition to making the cut pattern invisible. But also possibly, the index-matching material located between the vision base element and the auxetic film may be combined with a connecting film, this latter producing the attachment of the index-matching material provided onto the auxetic film to the vision base element.

Alternatively, the layer of the index-matching material may extend continuously over the auxetic film on a side thereof that is opposite the vision base element, so as to form an optical surface of the ophthalmic element.

In invention embodiments where respective materials of the vision base element and the auxetic film are transparent and have substantially equal values of refractive index, the material of the vision base element may fill the gaps of the auxetic film that are due to the cut pattern. No additional material is required for suppressing the light scattering.

Generally for the invention, the film structure may be multilayered and/or comprise cells which are juxtaposed next to one another parallel to the optical surface of the vision base element. The film structure can therefore provide the ophthalmic element with a great variety of functions, depending on the type and operation of the film structure. In particular, the film structure may be adapted to produce at least one of the following functions: an antireflecting function, an electrical conduction function, a solar-protection function, a photochromic function, an electrochromic function, a polarizing function, a function based on a holographic optical element, or a dioptric function, either passive or active dioptric function. The ophthalmic element is therefore provided with the one or several functions of concern.

Generally for the invention again, the ophthalmic element may form a spectacle lens, a helmet glass, a skiing mask, a diving mask, a goggle glass, an augmented reality device or a virtual reality device. The ophthalmic element is therefore a solution for a wide range of applications.

A second aspect of the invention proposes a method for manufacturing an ophthalmic element according to the first invention aspect. The method comprises:

- providing the film structure that comprises the at least one auxetic film; and
- bonding the film structure to the optical surface of the vision base element, so that the film structure conforms to this optical surface.

Thanks to the auxetic behavior of the film structure, the occurrence of stresses, wrinkles, cracks and delaminations is limited or suppressed when the film structure is bonded to the optical surface of the vision base element.

When the auxetic film is made of an optically transparent material, and the ophthalmic element further comprises portions of an index-matching material that fill gaps of the auxetic film provided with the cut pattern, the index-matching material having a refractive index value substantially equal to that of the auxetic film, the method may comprise:

- arranging the film structure and the vision base element within a mold, so that the auxetic film faces the vision base element; then
- introducing the index-matching material between the film structure and the vision base element, so that the index-matching material fills the gaps of the auxetic film that are due to the cut pattern and further forms a layer of this index-matching material which extends continuously across the optical surface, and so that this layer of index-matching material permanently connects the auxetic film to the vision base element.

The index-matching material thus bonds the film structure and the vision base element to each other while making the cut pattern invisible. No additional material is therefore needed to ensure that the film structure and the vision base element are bonded to form the ophthalmic element.

Alternatively, the method may comprise:

- adhering the film structure to the optical surface of the vision base element so that the auxetic film forms an exposed surface oriented away from the vision base element;
- arranging the vision base element with the film structure adhered thereto within a mold, so that the auxetic film faces an internal face of the mold; then
- introducing the index-matching material between the auxetic film and the internal face of the mold, so that the index-matching material fills the gaps of the auxetic film that are due to the cut pattern and forms an optical surface of the ophthalmic element.

The index-matching material creates therefore an optical surface of the ophthalmic element while making the cut pattern invisible by filling the gaps of the auxetic film. Moreover, the mold may be designed to confer a desired shape to the optical surface of the ophthalmic element, as formed by the index-matching material. The method thus allows to obtain easily ophthalmic elements having different shapes of optical surface.

When both the vision base element and the auxetic film are made of optically transparent materials that have substantially equal refractive indices, the method may comprise:

- arranging the film structure within a mold, so that the auxetic film faces an internal volume of the mold that is intended to determine a shape of the vision base element; then

- introducing a material into the internal volume of the mold, so that this material constitutes the vision base element, fills the gaps of the auxetic film that are due to the cut pattern and adheres to the auxetic film.

In such latter implementations, no index-matching material different from the material of the vision base element is needed to render the cut pattern invisible. The ophthalmic element can be manufactured in this way more quickly as the shaping of the vision base element, its adhesion to the auxetic film and the suppression of the light scattering take place at the same time.

In improved embodiments of the invention, the method may further comprise the following step performed before arranging the film structure within the mold:

- designing the auxetic film so that a shape of the film structure varies upon heating the mold and/or increasing a pressure within the mold and/or applying mechanical deformation and pressure, so as to reduce residual stresses in the film structure.

In this way, stresses that may be generated in the auxetic film when it is provided with the desired final shape are further reduced, in addition to the reduction already provided by the auxetic behavior of the film structure.

In particular, the auxetic film may be designed so that a shape of the film structure changes to a progressive surface upon heating and/or applying differential pressure to the film structure. The invention can thus be further improved in case the ophthalmic element has a progressive surface.

In all implementations of the invention that use a mold, this mold may be an injection mold or a casting mold, including molds provided with improvements such as vacuum assisted molds or UV-transparent molds.

In addition, other processes may be implemented alternatively for applying the index-matching material onto one surface. For instance, the index-matching material may be applied onto the vision base element surface or onto the auxetic structure by spin-coating, spray-coating, inkjet, lamination on one or the other of the surfaces, etc. Still another process which may be implemented is making the index-matching material to diffuse through capillarity into the gaps of the auxetic film or structure, possibly using a vacuum-assisted diffusion process.

Generally, the cut pattern of the auxetic film may be formed by implementing one of the following processes:

- a mechanical cutting, using any cutting tool, in particular a die-cutting machine for instance;
- a laser cutting; and
- a ultrasonic cutting.

The cut pattern that confers the auxetic behavior to the film structure can thus be produced using a simple and inexpensive technique. The ophthalmic element can therefore be low-cost and easy to manufacture.

## BRIEF DESCRIPTION OF THE DRAWINGS

Other features and advantages of the invention disclosed herein will become apparent from the following description of non-limiting embodiments, with reference to the appended drawings, in which:

Fig. 1A, Fig. 1B and Fig. 1C are schematic cross-sectional views of three examples of ophthalmic elements according to the invention.

Fig. 2 is a schematic perspective view of an example of vision base element which may be used in the ophthalmic element of Fig. 1A or Fig. 1B.

Fig. 3 is a schematic cross-sectional view of a first example of auxetic film which may be used in the examples of Fig. 1A-Fig. 1C.

Fig. 4 is a schematic cross-sectional view of a second example of auxetic film which may be used in the examples of Fig. 1A-Fig. 1C.

Fig. 5A, Fig 5B and Fig. 5C are schematic cross-sectional views that illustrate manufacturing methods suitable for the ophthalmic element examples of Fig. 1A, Fig 1B and Fig. 1C, respectively.

Fig. 6A is a plan view of a cut pattern which may be implemented in a sacrificial film portion used in accordance with the invention.

Fig. 6B corresponds to Fig. 6A for another cut pattern.

## DETAILED DESCRIPTION OF SEVERAL EMBODIMENTS

In these figures, elements represented do not correspond to actual dimensions or dimension ratios. In addition, same references indicated in several ones of the figures denote same elements.

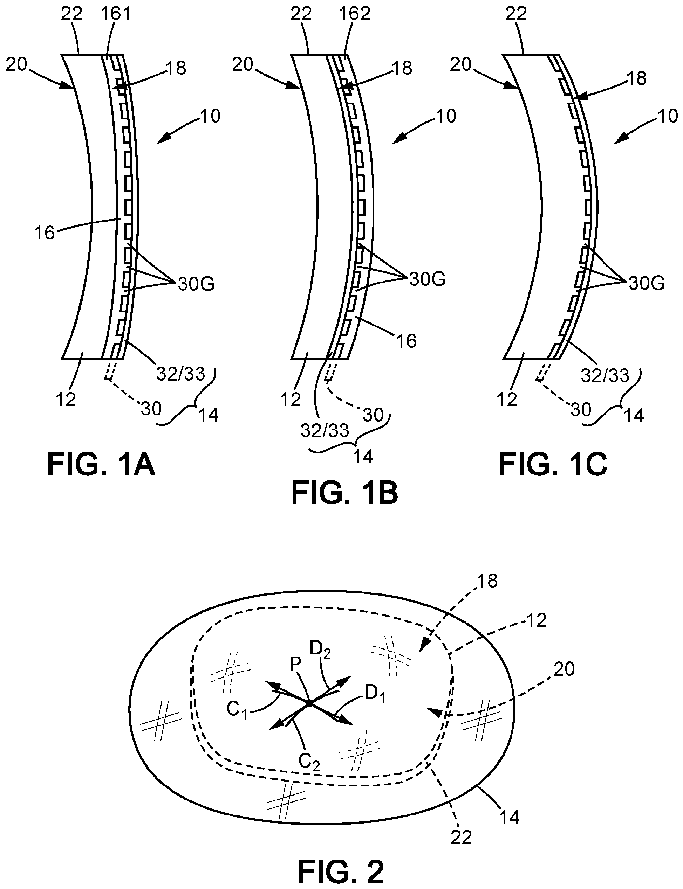

According to Fig. 1A, Fig. 1B and Fig.1C, an ophthalmic element 10 comprises a vision base element 12 and a film structure 14. Optionally, the ophthalmic element 10 may further comprise a portion of an index-matching material 16 (Fig. 1A and Fig. 1B) that will be described later. The ophthalmic element 10 forms for example a spectacle lens, a helmet glass, a skiing mask, a diving mask or a goggle glass depending on the design and shape of the vision base element 12. The case of a spectacle lens will be used hereafter for illustration purpose. Also for illustrative purpose, the film structure is applied onto a convex surface of the vision base element in the detailed implementations of the invention which are described in detail hereafter, but it may be alternatively applied onto a concave surface of the vision base element, or two auxetic films applied on one convex surface and one concave surface of the vision base element, respectively.

The vision base element 12 comprises a front face 18 and a rear face 20, which are usually convex and concave respectively. The actual shapes of the front face 18 and rear face 20 depend on an optical power and astigmatism values that are to be produced by the ophthalmic element 10. The vision base element 12 may be a semi-finished eyeglass with only the front face 18 being a final optical surface, or an eyeglass with both the front face 18 and rear face 20 being final optical surfaces. In addition, a peripheral edge 22 of the vision base element 12 connects the front face 18 and rear face 20 to each other. The peripheral edge 22 may be circular for a semi-finished eyeglass, or may conform in size and shape to a spectacle frame in which the ophthalmic element 10 being a spectacle lens is intended to be mounted. For clarity sake, the following description will be limited to invention embodiments where the film structure 14 is arranged on the convex front face 18, but other configurations may be contemplated as well. The front face 18 then constitutes the optical surface of the vision base element as introduced in the general part of this description. As shown in Fig. 2, the front face 18 of the vision base element 12 has two curvatures $C_1$ and $C_2$ at any point P in this face. These curvatures $C_1$ and $C_2$ are defined respectively with respect to two directions $D_1$ and $D_2$ which are tangential to the front face 18 at point P and perpendicular to each other. In most cases, both curvatures $C_1$ and $C_2$ are non-zero and of one and same sign, i.e. corresponding to one and same curvature orientation. In such cases, the front face 18 is said to be a synclastic surface. However, using an auxetic film structure 14 as described below may also be implemented with a monoclastic or anticlastic surface of the vision base element 12.

The vision base element 12 may be of any optically transparent material that is commonly used in the ophthalmic field, in particular a polymer-based material.

The film structure 14 has an initial planar shape and is flexible. The initial planar shape of the film structure 14 is a major issue for its manufacturing cost. Its thickness usually ranges from one hundred nanometers to several tens or hundreds of micrometers. However, such film structure 14 exhibits important stresses when forced to conform to a synclastic or anticlastic surface. In Fig. 2, the film structure 14 is shown as a disk-shaped patch tangential to the front face 18 at point P. But it is then distant along the sag direction from the front face 18 near the peripheral edge 22. The front face 18 being curved and the film structure 14 being initially planar, hash signs that represent light reflections in Fig. 2 are drawn with curved dashed lines when they relate to the front face 18 of the vision base element 12 in backplane position, and with straight continuous lines when they relate to the film structure 14 in foreground position.

The film structure 14 is at least partially transparent for vision applications, at least within an optically useful area of the ophthalmic element 10.

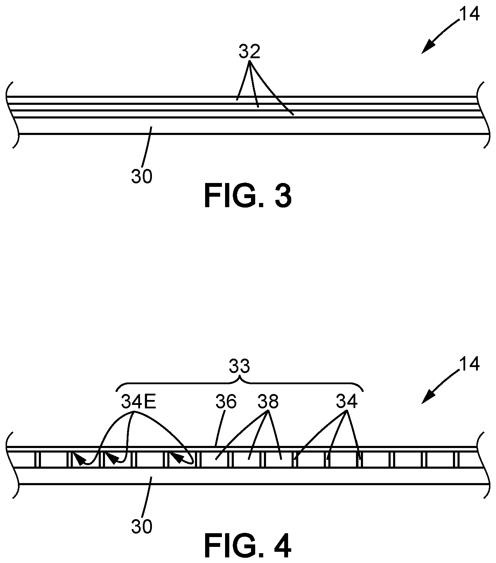

The film structure 14 may comprise a single layer, but it may alternatively be multilayered as represented in Fig. 3. In such latter case, the film structure 14 comprises at least one support film 30 and at least one layer 32. For example, a plurality of layers 32 that are superposed on each other may have been deposited on the support film 30 using at least one thin film coating process. In particular, such multilayer configuration for the film structure 14 is appropriate for providing an antireflecting function or a solar protection function.

Alternatively, the film structure 14 may have a cellular structure as denoted by reference number 33 in Fig. 4. Then, it comprises again the support film 30, but this latter is provided with cell-separating walls 34 and a capping layer 36. The capping layer 36 seals the cells 38 at the top edges 34E of the cell-separating walls 34. In this way, the cells 38 are appropriate to contain permanently functionalization material portions. Such cellular film structure has been widely described in the literature, and suits for providing the ophthalmic element 10 with photochromic or electrochromic functions, for example.

The film structure 14 may also or alternatively comprise a refractive index gradient or any variation of refractive index.

When such film structure 14 in accordance with Fig. 3 or Fig. 4 is made to conform to the synclastic front face 18 of the vision base element 12, the support film 30 forms cracks or wrinkles which result into delaminations in the final ophthalmic element 10. The present invention overcomes this technical problem by using a support film 30 that is auxetic. For this reason, the support film 30 has been called directly auxetic film in the general part of the present description and below. Unlike most of films, the auxetic film 30 can expand simultaneously along two directions which are perpendicular to each other and both tangential to the film, at at least one location in the film or any location therein. In the same way, it can also shrink simultaneously along both directions. This behavior is commonly expressed using the Poisson ratio v, which quantifies a response of the film along a transverse direction when a change in length is applied to the film along an axial direction. Both axial and transverse directions are perpendicular to each other and tangential to the film. The relative axial strain $\varepsilon_{axial}$ is $\varepsilon_{axial} = \dfrac{A_f - A_0}{A_0}$, where $A_0$ and $A_f$ are length values along the axial direction of an elementary film portion at point P, respectively when no stress is applied to this film portion and when a non-zero stress is applied. Similarly, the relative transverse strain $\varepsilon_{trans}$ is $\varepsilon_{trans} = \dfrac{T_f - T_0}{T_0}$, where $T_0$ and $T_f$ are length values along the transverse direction of the same elementary film portion, respectively when no stress is applied to the film portion and when the non-zero stress is applied along the axial direction. The Poisson ratio v is then $v = \dfrac{-\varepsilon_{trans}}{\varepsilon_{axial}}$. The films which were applied on vision base elements before the present invention have positive values for the Poisson ratio. Unlike such prior implementations, the support film 30 used according to the invention has a negative value for the Poisson ratio, namely it is auxetic. In this way the auxetic film 30 can expand at any point P where it has the auxetic behavior simultaneously along two directions which are perpendicular to each other and parallel to the film. Similarly, it can shrink simultaneously along these two directions. Thus, auxetic films suit especially for conforming to synclastic surfaces, without generating much internal stresses. For this reason, when arranged on a synclastic surface of the ophthalmic element 10, the auxetic film 30 does not tend to generate wrinkles, cracks and delaminations over time.

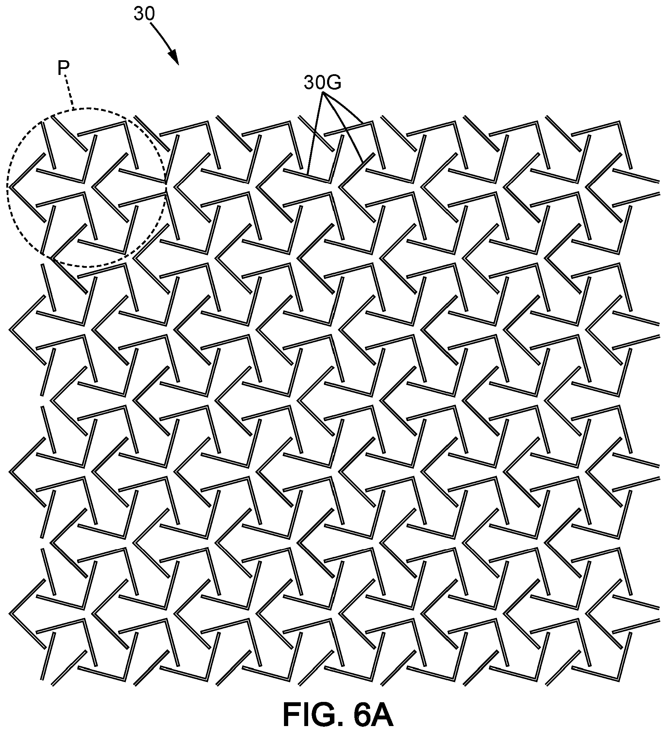

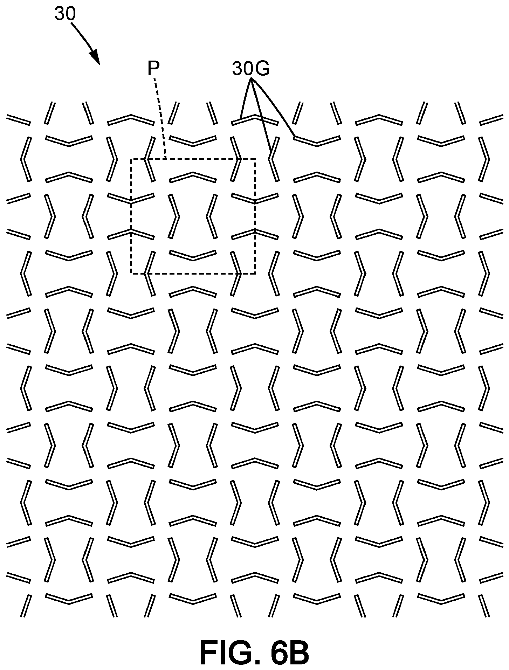

In possible embodiments of the invention, the auxetic film 30 is made of an optically transparent polymer-based material. In particular, the auxetic film 30 may be made of cellulose triacetate, also known as TAC, or polyethylene terephtalate, also known as PET, or cyclo-olefin polymers or copolymers, known also as COP or COC, or any polymer-based material commonly used in the ophthalmic field. Its auxetic behavior may be provided by a cut pattern which extends across the thickness of the film and may extend throughout the entire film area that is to conform to the curved optical surface of the vision base element. Several such cut patterns are well known, and they can be produced at low cost in the support film 30 using one of the following processes: mechanical cutting including matrix stamping, laser cutting and ultrasonic cutting. Fig. 6A and Fig. 6B show two examples of cut patterns which may be implemented to provide the support film 30 with the auxetic behavior. In these figures, P denotes a base pattern which is repeated across the film 30 for obtaining distributed auxetic behavior. In Fig. 1A-Fig. 1C and Fig. 6A-Fig. 6B, reference 30G denotes gaps in the auxetic film 30 caused by the cut pattern.

These gaps 30G would scatter light, be unaesthetic and even render vision through the ophthalmic element 10 blurry without implementing the invention improvement now described. For avoiding light scattering due to the gaps 30G, the ophthalmic element 10 also comprises the portion of index-matching material 16. This portion 16 fills the gaps 30G in the auxetic film 30 so as to suppress light scattering which may be caused by these gaps otherwise. The index-matching material is selected to have a refractive index value which equals that of the auxetic film 30. The cut pattern is then invisible and the ophthalmic element 10 provides excellent vision comfort and is aesthetic.

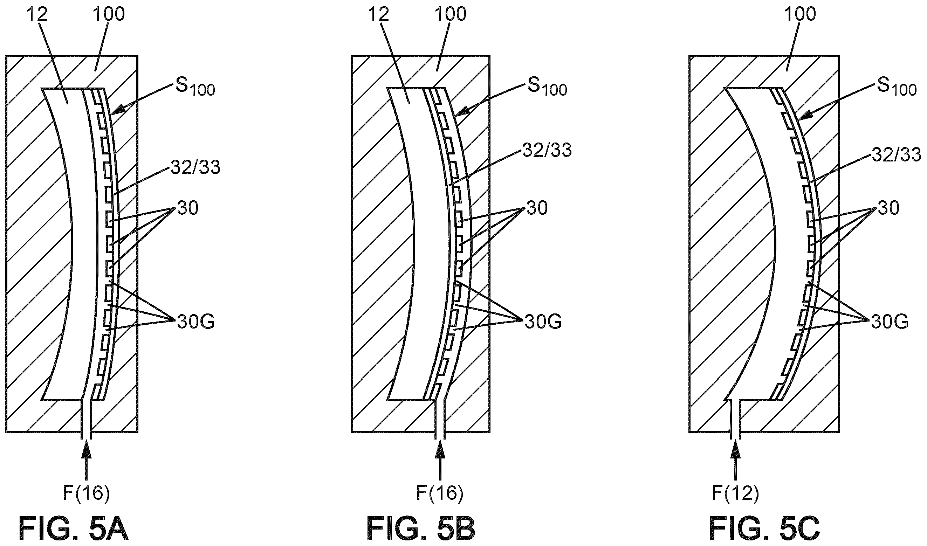

In the configuration of the ophthalmic element 10 shown in Fig. 1A, the portion of index-matching material 16 fills the gap 30G and further forms a continuous layer 161 between the auxetic film 30 and the vision base element 12. If the film structure 14 comprises layers 32 and/or the cellular structure 33, these are supported by the auxetic film 30 on its side which faces away from the vision base element 12. The ophthalmic element 10 may then be manufactured in the following way. First, the auxetic film 30 and the vision base element 12 are both arranged within a mold 100 with a gap therebetween as shown in Fig. 5A. Then, the index-matching material is injected into the mold 100 between the auxetic film 30 and the vision base element 12 as shown by arrow F(16), for filling the gaps 30G and forming simultaneously the continuous layer 161 between the auxetic film 30 and the vision base element 12. For the index-matching material to penetrate more easily into the gaps 30G and filling them completely, the injection process may be combined with pumping of gas from inside of the mold 100. The layer 161 ensures permanent connection of the auxetic film 30 to the vision base element 12. The index-matching material implemented in this way may be a pressure-sensitive adhesive, a hot-melt adhesive, a UV-cured adhesive composition or a thermally-cured adhesive composition. For the configuration of the ophthalmic element 10 so-obtained, the film structure 14 forms the front face of the final ophthalmic element 10. The injection of the index-matching material between the base vision element 12 and the auxetic film 30 forces this latter to conform to an internal face $S_{100}$ of the mold 100, thereby defining the final shape of the front face of the ophthalmic element 10.

In the configuration of the ophthalmic element 10 shown in Fig. 1B, the portion of index-matching material 16 fills again the gaps 30G but now forms a continuous layer 162 that is located on a side of the auxetic film 30 that is opposite the vision base element 12. In case layers 32 and/or the cellular structure 33 are supported by the auxetic film 30, these are located on the side of the auxetic film 30 which faces the vision base element 12. The ophthalmic element 10 may then be manufactured in the following way. First, the auxetic film 30 is adhered to the front face 18 of the vision base element 12 using any bonding process known in the art, for example using a pressure-sensitive adhesive. Then, the vision base element 12 with the auxetic film 30 adhered thereto is introduced into the mold 100 as shown in Fig. 5B, and the index-matching material is injected between the internal face $S_{100}$ of the mold 100 and the auxetic film 30 (see arrow F(16) in Fig. 5B). For such other configuration of the ophthalmic element 10, its final front face is formed by the continuous layer 162 of the index-matching material, this latter being preferably a UV-cured adhesive composition or a thermally-cured adhesive composition. However, it may be advantageous to provide an additional film in the mold 100 along its internal face $S_{100}$ such as a UV- or heat-curable hard coat, for avoiding that the continuous layer 162 sticks too much to the mold or that the exposed surface after demolding is sticky.

Fig. 1C illustrates still another possible configuration for the ophthalmic element 10 while implementing again the invention. It applies when the material of the vision base element 12 has a refractive index value which equals that of the auxetic film 30. Then, the vision base element 12 can replace the portion of index-matching material in addition to its initial functions of supporting element and optical power production. To this end, the material of the vision base element has to fill the gaps 30G of the auxetic film 30. As shown in Fig. 5C, the auxetic film 30 is arranged within the mold 100 with the layers 32 or the cellular structure 33 arranged against the internal face $S_{100}$ of the mold. Then, the material of the vision base element is injected into the mold 100 (see arrow F(12) in Fig. 5C) so as to fill it completely, thereby forming the vision base element 12 and filling the gaps 30G of the auxetic film 30. This injection forces the auxetic film 30 to conform to the internal face $S_{100}$ of the mold, thereby defining the final shape of the front face of the ophthalmic element 10. This latter process suits when the respective materials of the vision base element 12 and the auxetic film 30 adhere to each other, otherwise an intermediate adhesion material is to be deposited on the auxetic film 30 and into its gaps 30G before it is arranged within the mold 100.

For the manufacturing methods just described with reference to Fig. 1A-Fig. 1C, it is possible to further reduce or suppress residual stresses that may exist within the auxetic film 30 in the final product. To this end, the auxetic film 30 may be designed so that its shape spontaneously changes during the injection process so as to become similar to that of the internal face $S_{100}$ of the mold 100. This may be achieved by appropriately selecting the cut pattern and variations thereof across the front face 18. Other possibilities for obtaining such shape changes of the auxetic film 30 may consist in applying a mechanical and/or thermal treatment to the auxetic film 30 before using it in the injection process. The parameters that trigger such shape variations for the auxetic film 30 may be the temperature increase and/or differential pressure involved in the injection process.

For some applications of the invention, and in particular when the ophthalmic element 10 is a spectacle lens, its front face may be of progressive surface type. In such case, the internal face $S_{100}$ of the mold 100 has a shape that corresponds to this progressive surface.

It will be appreciated that the embodiments described above are illustrative of the invention disclosed herein, and that various modifications can be made while maintaining several of the advantages mentioned, within the scope of the appended claims.

## Claims

1. An ophthalmic element (10) comprising a vision base element (12) and a film structure (14) that is adhered to a curved optical surface (18) of the vision base element, so that the film structure conforms to said optical surface, wherein the film structure comprises at least one auxetic film (30) that has a negative Poisson ratio v, said Poisson ratio v being defined as:

$$\nu = \frac{-\varepsilon_{trans}}{\varepsilon_{axial}}$$

wherein $\varepsilon_{trans}$ is a relative transverse strain of the auxetic film (30), and $\varepsilon_{axial}$ is a relative axial strain of the auxetic film, said relative transverse strain and relative axial strain being positive for increases in transverse dimension and axial dimension, respectively, of the auxetic film, or being negative for decreases in said transverse dimension and axial dimension, respectively, of the auxetic film.

2. The ophthalmic element (10) according to claim 1, wherein the optical surface (18) of the vision base element has two non-zero curvature values at at least one point (P) of said optical surface, along two directions ($D_1$, $D_2$) which are tangential to said optical surface and perpendicular to each other, in particular said two non-zero curvature values being both positive or both negative.

3. The ophthalmic element (10) according to claim 1 or 2, wherein the auxetic film (30) is provided with a cut pattern.

4. The ophthalmic element (10) according to claim 3, wherein the auxetic film (30) is made of an optically transparent material, and the ophthalmic element further comprises portions of an index-matching material (16) that fill gaps (30G) of the auxetic film due to the cut pattern, the index-matching material having a refractive index value substantially equal to a refractive index value of the auxetic film.

5. The ophthalmic element (10) according to claim 4, wherein the index-matching material is of one of the following types: an adhesive, in particular a pressure-sensitive adhesive, a hot-melt adhesive, a UV-cured adhesive composition, a thermally-cured adhesive composition, and also a primer and a hard coat.

6. The ophthalmic element (10) according to claim 4 or 5, wherein a layer (161) of the index-matching material extends between the vision base element (12) and the auxetic film (30), continuously across the optical surface (18), so as to permanently connect the auxetic film to the vision base element; or a layer (162) of the index-matching material extends continuously over the auxetic film (30) on a side thereof that is opposite the vision base element (12), so as to form an optical surface of the ophthalmic element (10).

7. The ophthalmic element (10) according to claim 3, wherein respective materials of the vision base element (12) and the auxetic film (30) are transparent and have substantially equal values of refractive index, and the material of the vision base element fills gaps (30G) of the auxetic film due to the cut pattern.

8. The ophthalmic element (10) according to any one of the preceding claims, wherein the film structure (14) is multilayered and/or comprises cells (38) which are juxtaposed next to one another parallel to the optical surface (18) of the vision base element (12).

9. The ophthalmic element (10) according to any one of the preceding claims, wherein the film structure (14) is adapted to produce at least one of the following functions: an antireflecting function, an electrical conduction function, a solar-protection function, a photochromic function, an electrochromic function, a polarizing function, a function based on a holographic optical element, or a dioptric function, either passive or active dioptric function.

10. The ophthalmic element (10) according to any one of the preceding claims, forming a spectacle lens, a helmet glass, a skiing mask, a diving mask, a goggle glass, an augmented reality device or a virtual reality device.

11. A method for manufacturing an ophthalmic element (10) according to any one of the preceding claims, the method comprising:

   - providing the film structure (14) that comprises the at least one auxetic film (30); and
   - bonding the film structure (14) to the optical surface (18) of the vision base element (12), so that the film structure conforms to said optical surface.

12. The method according to claim 11, wherein the ophthalmic element (10) meets claim 4 and the method comprises:

   - arranging the film structure (14) and the vision base element (12) within a mold (100), so that the auxetic film (30) faces the vision base element; then
   - introducing the index-matching material (16) between the film structure (14) and the vision base element (12), so that the index-matching material fills the gaps (30G) of the auxetic film (30) due to the cut pattern and further forms a layer (161) of said index-matching material which extends continuously across the optical surface (18), and so that said layer of the index-matching material permanently connects the auxetic film to the vision base element.

13. The method according to claim 11, wherein the ophthalmic element (10) meets claim 4 and the method comprises:

   - adhering the film structure (14) to the optical surface (18) of the vision base element (12) so that the auxetic film (30) forms an exposed surface oriented away from the vision base element;

- arranging the vision base element (12) with the film structure (14) adhered thereto within a mold (100), so that the auxetic film (30) faces an internal face ($S_{100}$) of the mold (100); then

- introducing the index-matching material (16) between the auxetic film (30) and the internal face ($S_{100}$) of the mold (100), so that the index-matching material fills the gaps (30G) of the auxetic film (30) due to the cut pattern and forms an optical surface of the ophthalmic element (10).

14. The method according to claim 11, wherein the ophthalmic element (10) meets claim 7 and the method comprises:

- arranging the film structure (14) within a mold (100), so that the auxetic film (30) faces an internal volume of the mold that is intended to determine a shape of the vision base element (12); then

- introducing a material into the internal volume of the mold (100), so that said material constitutes the vision base element (12), fills the gaps (30G) of the auxetic film (30) due to the cut pattern and adheres to said auxetic film.

15. The method according to any one of claims 12 to 14, further comprising the following step performed before arranging the film structure (14) within the mold (100):

- designing the auxetic film (30) so that a shape of the film structure (14) varies upon heating the mold (100) and/or increasing a pressure within the mold and/or applying mechanical deformation and pressure, so as to reduce residual stresses in the film structure.

16. The method according to claim 15, wherein the auxetic film (30) is designed so that a shape of the film structure (14) changes to a progressive surface upon heating and/or applying differential pressure to said film structure.

17. The method according to any one of claims 12 to 16, wherein the cut pattern of the auxetic film (30) is formed by implementing one of the following processes:

- a mechanical cutting;
- a laser cutting; and
- a ultrasonic cutting.

**Patentansprüche**

1. Ophthalmisches Element (10), das ein Sichtbasiselement (12) und eine Filmstruktur (14) umfasst, das an eine gekrümmte optische Oberfläche (18) des Sichtbasiselements angeheftet ist, sodass die Filmstruktur an die optische Oberfläche angepasst ist, wobei die Filmstruktur mindestens einen auxetischen Film (30) umfasst, der eine negative Poissonzahl v aufweist, wobei die Poissonzahl v definiert ist als:

$$v = \frac{-\varepsilon_{trans}}{\varepsilon_{axial}}$$

wobei $\varepsilon_{trans}$ eine relative Querdehnung des auxetischen Films (30) ist und $\varepsilon_{axial}$ eine relative Axialdehnung des auxetischen Films ist, wobei die relative Querdehnung und die relative Axialdehnung für Zunahmen in einer Querabmessung bzw. in einer Axialabmessung des auxetischen Film positiv sind oder für Abnahmen in der Querabmessung bzw. in der Axialabmessung des auxetischen Film negativ sind.

2. Ophthalmisches Element (10) nach Anspruch 1, wobei die optische Oberfläche (18) des Sichtbasiselements zwei Nicht-Null-Kurvenkrümmungswerte an mindestens einem Punkt (P) der optischen Oberfläche entlang zwei Richtungen ($D_1$, $D_2$) aufweist, die tangential zur optischen Oberfläche und senkrecht zueinander sind, wobei die beiden Nicht-Null-Kurvenkrümmungswerte insbesondere beide positiv oder beide negativ sind.

3. Ophthalmisches Element (10) nach Anspruch 1 oder 2, wobei der auxetische Film (30) mit einem Schnittmuster bereitgestellt wird.

4. Ophthalmisches Element (10) nach Anspruch 3, wobei der auxetische Film (30) aus einem optisch transparenten Material gefertigt ist, und wobei das ophthalmische Element ferner Abschnitte aus einem Indexanpassungsmaterial (16) umfasst, das Lücken (30G) des auxetischen Films füllt, die sich aus dem Schnittmuster ergeben, wobei das Indexanpassungsmaterial einen Brechungsindex aufweist, der im Wesentlichen gleich einem Brechungsindex des auxetischen Materials ist.

5. Ophthalmisches Element (10) nach Anspruch 4, wobei das Indexanpassungsmaterial einer der folgenden Typen ist: ein Klebstoff, insbesondere ein druckempfindlicher Klebstoff, ein heißschmelzender Klebstoff, eine UVgehärtete Klebstoffzusammensetzung, eine thermisch gehärtete Klebstoffzusammensetzung und auch eine Haftgrundierung und eine Hartbeschichtung.

**6.** Ophthalmisches Element (10) nach Anspruch 4 oder 5, wobei sich eine Schicht (161) des Indexanpassungsmaterials zwischen dem Sichtbasiselement (12) und dem auxetischen Film (30) durchgehend auf der optischen Oberfläche (18) erstreckt, um den auxetischen Film dauerhaft mit dem Sichtbasiselement zu verbinden; oder wobei sich eine Schicht (162) des Indexanpassungsmaterials durchgehend über dem auxetischen Film (30) auf einer Seite davon erstreckt, die entgegengesetzt zu dem Sichtbasiselement ist (12), um eine optische Oberfläche des ophthalmischen Elements (10) zu bilden.

**7.** Ophthalmisches Element (10) nach Anspruch 3, wobei die jeweiligen Materialien des Sichtbasiselements (12) und des auxetischen Films (30) transparent sind und im Wesentlichen gleiche Werte für ihren Brechungsindex aufweisen, und wobei das Material des Sichtbasiselements Lücken (30G) des auxetischen Films füllt, die sich aus dem Schnittmuster ergeben.

**8.** Ophthalmisches Element (10) nach einem der vorhergehenden Ansprüche, wobei die Filmstruktur (14) mehrschichtig ist und/oder Zellen (38) umfasst, die nebeneinanderliegend nahe beieinander parallel zur optischen Oberfläche (18) des Sichtbasiselements (12) angeordnet sind.

**9.** Ophthalmisches Element (10) nach einem der vorhergehenden Ansprüche, wobei die Filmstruktur (14) geeignet ist, um mindestens eine der folgenden Funktionen hervorzubringen: eine Antireflex-Funktion, eine Elektroleitungsfunktion, eine Sonnenschutzfunktion, eine fotochrome Funktion, an elektrochrome Funktion, eine Polarisationsfunktion, eine Funktion basierend auf einem holografischen optischen Element oder eine dioptrische Funktion, entweder eine passive oder eine aktive dioptrische Funktion.

**10.** Ophthalmisches Element (10) nach einem der vorhergehenden Ansprüche, das ein Brillenglas, ein Helmglas, eine Skimaske, eine Tauchmaske, ein Schutzbrillenglas, eine Vorrichtung einer erweiterten Realität oder eine Vorrichtung einer virtuellen Realität bildet.

**11.** Verfahren zum Herstellen eines ophthalmischen Elements (10) nach einem der vorhergehenden Ansprüche, wobei das Verfahren umfasst:

- Bereitstellen der Filmstruktur (14), die mindestens einen auxetischen Film (30) umfasst; und
- Bonden der Filmstruktur (14) an die optische Oberfläche (18) des Sichtbasiselements (12), sodass die Filmstruktur an die optische Oberfläche angepasst ist.

**12.** Verfahren nach Anspruch 11, wobei das ophthalmische Element (10) Anspruch 4 erfüllt und wobei das Verfahren umfasst:

- Anordnen der Filmstruktur (14) und des Sichtbasiselements (12) innerhalb einer Gießform (100), sodass der auxetische Film (30) dem Sichtbasiselement zugewandt ist; danach
- Einfügen des Indexanpassungsmaterial (16) zwischen die Filmstruktur (14) und das Sichtbasiselement (12), sodass das Indexanpassungsmaterial die Lücken (30G) des auxetischen Films (30) füllt, die sich aus dem Schnittmuster ergeben, und ferner eine Schicht (161) aus dem Indexanpassungsmaterial bildet, die sich durchgehend auf der optischen Oberfläche (18) erstreckt, und sodass die Schicht des Indexanpassungsmaterials den auxetischen Film dauerhaft mit dem Sichtbasiselement verbindet.

**13.** Verfahren nach Anspruch 11, wobei das ophthalmische Element (10) Anspruch 4 erfüllt und wobei das Verfahren umfasst:

- Anheften der Filmstruktur (14) an die optische Oberfläche (18) des Sichtbasiselements (12), sodass der auxetische Film (30) eine freiliegende Oberfläche bildet, die von dem Sichtbasiselement weg ausgerichtet ist;
- Anordnen des Sichtbasiselements (12) mit der Filmstruktur (14), die daran angeheftet ist, innerhalb einer Gießform (100), sodass der auxetische Film (30) einer Innenfläche ($S_{100}$) der Gießform (100) zugewandt ist; danach
- Einfügen des Indexanpassungsmaterial (16) zwischen den auxetischen Film (30) und die Innenfläche ($S_{100}$) der Gießform (100), sodass das Indexanpassungsmaterial die Lücken (30G) des auxetischen Films (30) füllt, die sich aus dem Schnittmuster ergeben, und eine optische Oberfläche des optischen Elements (10) bildet.

**14.** Verfahren nach Anspruch 11, wobei das ophthalmische Element (10) Anspruch 7 erfüllt und wobei das Verfahren umfasst:

- Anordnen der Filmstruktur (14) innerhalb der Gießform (100), sodass der auxetische Film (30) einem Innenvolumen der Gießform zugewandt ist, die vorgesehen ist, um eine Form des Sichtbasiselements (12) zu bestimmen; danach
- Einfügen eines Materials in das Innenvolumen der Gießform (100), sodass das Material, aus dem das Sichtbasiselement (12) besteht, die Lücken(30G) des auxetischen Films (30) füllt, die sich aus dem Schnittmuster ergeben, und sich an den auxetischen Film anheftet.

**15.** Verfahren nach einem der Ansprüche 12 bis 14, das ferner den folgenden Schritt umfasst, der vor dem Anordnen der Filmstruktur (14) innerhalb der Gießform (100) durchgeführt wird:

- Gestalten des auxetischen Films (30), sodass eine Form der Filmstruktur (14) beim Aufheizen der Gießform (100) variiert wird und/oder Erhöhen eines Drucks innerhalb der Gießform und/oder Ausüben einer mechanischen Verformung und eines mechanischen Drucks, um die verbliebenen Spannungen in der Filmstruktur zu verringern.

**16.** Verfahren nach Anspruch 15, wobei der auxetische Film (30) so gestaltet wird, dass eine Form der Filmstruktur (14) beim Aufheizen und/oder beim Ausüben eines differenziellen Drucks auf die Filmstruktur in eine progressive Oberfläche verändert wird.

**17.** Verfahren nach einem der Ansprüche 12 bis 16, wobei das Schnittmuster des auxetischen Films (30) gebildet wird, indem einer der folgenden Prozesse implementiert wird:

- ein mechanisches Schneiden;
- ein Laserschneiden; und
- ein Ultraschallschneiden.

## Revendications

**1.** Élément ophtalmique (10) comprenant un élément de base de vision (12) et une structure de film (14) qui est collée à une surface optique incurvée (18) de l'élément de base de vision, de telle sorte que la structure de film se conforme à ladite surface optique, dans lequel la structure de film comprend au moins un film auxétique (30) qui a un coefficient de Poisson négatif v, ledit coefficient de Poisson v étant défini comme :

$$v = \frac{-\varepsilon_{trans}}{\varepsilon_{axial}}$$

où $\varepsilon_{trans}$ est une déformation transversale relative du film auxétique (30), et $\varepsilon_{axial}$ est une déformation axiale relative du film auxétique, ladite déformation transversale relative et ladite déformation axiale relative étant positives pour des augmentations de dimension transversale et de dimension axiale, respectivement, du film auxétique, ou étant négatives pour des diminutions desdites dimension transversale et dimension axiale, respectivement, du film auxétique.

**2.** Élément ophtalmique (10) selon la revendication 1, dans lequel la surface optique (18) de l'élément de base de vision a deux valeurs de courbure non nulles en au moins un point (P) de ladite surface optique, selon deux directions ($D_1$, $D_2$) qui sont tangentielles à ladite surface optique et perpendiculaires l'une à l'autre, en particulier lesdites deux valeurs de courbure non nulles étant toutes deux positives ou toutes deux négatives.

**3.** Élément ophtalmique (10) selon la revendication 1 ou 2, dans lequel le film auxétique (30) est pourvu d'un motif de découpe.

**4.** Élément ophtalmique (10) selon la revendication 3, dans lequel le film auxétique (30) est constitué d'un matériau optiquement transparent, et l'élément ophtalmique comprend en outre des parties d'un matériau d'adaptation d'indice (16) qui remplissent des espaces (30G) du film auxétique en raison du motif de découpe, le matériau d'adaptation d'indice ayant une valeur d'indice de réfraction sensiblement égale à une valeur d'indice de réfraction du film auxétique.

**5.** Élément ophtalmique (10) selon la revendication 4, dans lequel le matériau d'adaptation d'indice est de l'un des types suivants : un adhésif, en particulier un adhésif sensible à la pression, un adhésif thermofusible, une composition adhésive durcie aux UV, une composition adhésive durcie thermiquement, ainsi qu'un primaire et un revêtement dur.

**6.** Élément ophtalmique (10) selon la revendication 4 ou 5, dans lequel une couche (161) du matériau d'adaptation d'indice s'étend entre l'élément de base de vision (12) et le film auxétique (30), de manière continue sur la surface optique (18), de façon à connecter de manière permanente le film auxétique à l'élément de base de vision ;
ou une couche (162) du matériau d'adaptation d'indice s'étend de manière continue sur le film auxétique (30) sur un côté de celui-ci qui est opposé à l'élément de base de vision (12), de façon à former une surface optique de l'élément ophtalmique (10).

**7.** Élément ophtalmique (10) selon la revendication 3, dans lequel des matériaux respectifs de l'élément de base de vision (12) et du film auxétique (30) sont transparents et ont des valeurs sensiblement égales d'indice de réfraction, et le matériau de l'élément de base de vision remplissent des espaces (30G) du film auxétique en raison du motif de découpe.

**8.** Élément ophtalmique (10) selon l'une quelconque des revendications précédentes, dans lequel la structure de film (14) est multicouche et/ou comprend des cellules (38) qui sont juxtaposées les unes à côté des autres parallèlement à la surface optique (18) de l'élément de base de vision (12).

9. Élément ophtalmique (10) selon l'une quelconque des revendications précédentes, dans lequel la structure de film (14) est adaptée pour produire au moins l'une des fonctions suivantes : une fonction antireflet, une fonction de conduction électrique, une fonction de protection solaire, une fonction photochromique, une fonction électrochromique, une fonction polarisante, une fonction basée sur un élément optique holographique, ou une fonction dioptrique, soit une fonction dioptrique passive soit une fonction dioptrique active.

10. Élément ophtalmique (10) selon l'une quelconque des revendications précédentes, formant un verre de lunettes, un verre de casque, un masque de ski, un masque de plongée, un verre de lunettes de protection, un dispositif de réalité augmentée ou un dispositif de réalité virtuelle.

11. Procédé de fabrication d'un élément ophtalmique (10) selon l'une quelconque des revendications précédentes, le procédé comprenant :

     - la fourniture de la structure de film (14) qui comprend l'au moins un film auxétique (30) ; et
     - le collage de la structure de film (14) à la surface optique (18) de l'élément de base de vision (12), de telle sorte que la structure de film se conforme à ladite surface optique.

12. Procédé selon la revendication 11, dans lequel l'élément ophtalmique (10) satisfait la revendication 4 et le procédé comprend :

     - l'agencement de la structure de film (14) et de l'élément de base de vision (12) dans un moule (100), de telle sorte que le film auxétique (30) fait face à l'élément de base de vision ; puis
     - l'introduction du matériau d'adaptation d'indice (16) entre la structure de film (14) et l'élément de base de vision (12), de telle sorte que le matériau d'adaptation d'indice remplit les espaces (30G) du film auxétique (30) en raison du motif de découpe et forme en outre une couche (161) dudit matériau d'adaptation d'indice qui s'étend de manière continue sur la surface optique (18), et de telle sorte que ladite couche du matériau d'adaptation d'indice connecte de manière permanente le film auxétique à l'élément de base de vision.

13. Procédé selon la revendication 11, dans lequel l'élément ophtalmique (10) satisfait la revendication 4 et le procédé comprend :

     - l'adhésion de la structure de film (14) à la surface optique (18) de l'élément de base de vision (12) de telle sorte que le film auxétique (30) forme une surface exposée orientée à l'opposé de l'élément de base de vision ;
     - l'agencement de l'élément de base de vision (12) avec la structure de film (14) adhérant à celui-ci dans un moule (100), de telle sorte que le film auxétique (30) fait face à une face interne ($S_{100}$) du moule (100) ; puis
     - l'introduction du matériau d'adaptation d'indice (16) entre le film auxétique (30) et la face interne ($S_{100}$) du moule (100), de telle sorte que le matériau d'adaptation d'indice remplit les espaces (30G) du film auxétique (30) en raison du motif de découpe et forme une surface optique de l'élément ophtalmique (10).

14. Procédé selon la revendication 11, dans lequel l'élément ophtalmique (10) satisfait la revendication 7 et le procédé comprend :

     - l'agencement de la structure de film (14) dans un moule (100), de telle sorte que le film auxétique (30) fait face à un volume interne du moule qui est destiné à déterminer une forme de l'élément de base de vision (12) ; puis
     - l'introduction d'un matériau dans le volume interne du moule (100), de telle sorte que ledit matériau constitue l'élément de base de vision (12), remplit les espaces (30G) du film auxétique (30) en raison du motif de découpe et adhère audit film auxétique.

15. Procédé selon l'une quelconque des revendications 12 à 14, comprenant en outre l'étape suivante réalisée avant d'agencer la structure de film (14) dans le moule (100) :

     - la conception du film auxétique (30) de telle sorte qu'une forme de la structure de film (14) varie lors du chauffage du moule (100) et/ou de l'augmentation d'une pression dans le moule et/ou de l'application d'une déformation mécanique et d'une pression, de façon à réduire les contraintes résiduelles dans la structure de film.

16. Procédé selon la revendication 15, dans lequel le film auxétique (30) est conçu de telle sorte qu'une forme de la structure de film (14) change vers une surface progressive lors du chauffage et/ou de l'application d'une pression différentielle à ladite structure de film.

17. Procédé selon l'une quelconque des revendications 12 à 16, dans lequel le motif de découpe du film auxétique (30) est formé par la mise en œuvre de l'un des procédés suivants :

     - une découpe mécanique ;
     - une découpe laser ; et

**EP 4 194 934 B1**

- une découpe ultrasonique.

FIG. 1A

FIG. 1B

FIG. 1C

FIG. 2

**FIG. 3**

**FIG. 4**

FIG. 5A

FIG. 5B

FIG. 5C

EP 4 194 934 B1

FIG. 6A

FIG. 6B

**EP 4 194 934 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009004265 A2